# EUROPEAN PATENT SPECIFICATION

(11) **EP 2 062 673 B1**
(45) Date of publication and mention of the grant of the patent: **26.05.2010**
(21) Application number: 08253448.8
(22) Date of filing: 23.10.2008
(51) Int. Cl.: B23K 20/12, F01D 5/30

(54) **A method of supporting a work piece**
Verfahren zum Stützen eines Werkstücks
Procédé de support d'une pièce de travail

(30) Priority: 23.11.2007 GB 0722924
(43) Date of publication of application: 27.05.2009
(73) Proprietor: Rolls-Royce plc, 65 Buckingham Gate London SW1E 6AT (GB)
(72) Inventor: Athey, Christopher Patrick, Littleover, Derby DE23 1LP (GB); Scott, Benjamin Nicholas, Breaston, Derby DE72 3AB (GB); Beaman, Paul Stuart, Derby DE1 1AJ (GB)
(74) Representative: Barcock, Ruth Anita

(56) References cited:
- WO-A-95/24291
- US-A- 6 106 233
- US-B1- 6 524 072

## Description

The present invention relates to a method of supporting a work piece during a manufacturing operation. In particular it relates to the provision of a compliant mount, which provides support to the work piece during a manufacturing operation such as friction welding.

Integrally bladed rotor discs are used in the compressor and turbine sections of gas turbine engines. It is known to manufacture and repair integrally bladed rotor by welding blades onto the outer periphery of a disc. The blades can be attached to the disc by either inertia or friction welding.

In the friction welding process the disc is held stationary whilst the blade is oscillated relative to the disc. The oscillating blade is brought into contact with the stationary disc whilst a force is applied. Sufficient heat is generated between the oscillating blade and the disc to bond the blades onto the disc.

It is important that during the linear friction welding process the disc is held stationary. The disc must also be supported so that the stresses generated during the welding process are uniformly distributed into the disc, so that distortion of the disc is avoided. The support must also hold the disc in position and maintain this position throughout the welding process so that the blades are secured to the disc within tight positional tolerances.

It is known to provide tooling to support the internal surfaces of the disc during the friction welding process. Difficulties arise however in providing tooling that can provide sufficient contact area with all the internal surfaces of the disc. If there is insufficient contact area between the internal surfaces of the disc and the tooling local stress points occur causing damage.

The rigidity of the tooling that supports the internal surfaces of the disc is also critical. If the rigidity is inadequate then the disc will move and the weld quality and the positional accuracy of the blade will be lost.

The present invention seeks to provide an improved method of supporting a disc during the welding process. The improved support overcomes the aforementioned problems and provides sufficient contact with the internal surfaces of the disc to prevent local stress points and has a stiffness that is designed to provide adequate restraint.

According to the present invention a method of supporting a work piece during a welding operation comprises the steps of mounting a first work piece on a support member, the first work piece being mounted on the support member to define a cavity between an internal surface of the work piece and the support member, pouring a material into the cavity between the work piece and the support member, solidifying the material in the cavity, the solidifying material expanding to fill the cavity and form a compressed layer which stiffens the support member, welding at least one second work piece on to an outer surface of the first work piece, the welding loads being transmitted through the compressed layer which acts to support the internal surface of the first work piece during the welding process and melting the compressed layer to release the welded work pieces from the support structure.

The material in the cavity may be a low melting point alloy such as a tin-bismuth alloy. Preferably the low melting point alloy has a yield strength of the order of 40 MPa and a high Young's modulus.

Preferably the compressed layer has a thickness in the range of 1-10 mm and is preferably of the order of 3mm.

In the preferred embodiment of the present invention the first work piece is a disc and the second work piece is a blade. The blade is attached to the disc by linear friction welding and the support member is at least partially segmented.

The present invention will now be described with reference to the accompanying drawings in which:
Figure 1 shows a blade being friction welded onto a disc.
Figure 2 shows a section through a support assembly for a disc in accordance with the present invention.
Figure a is an exploded view of the support assembly shown in Figure 2.

Integrally bladed rotors are produced by friction or inertia welding individual blades onto the outer periphery of a disc.

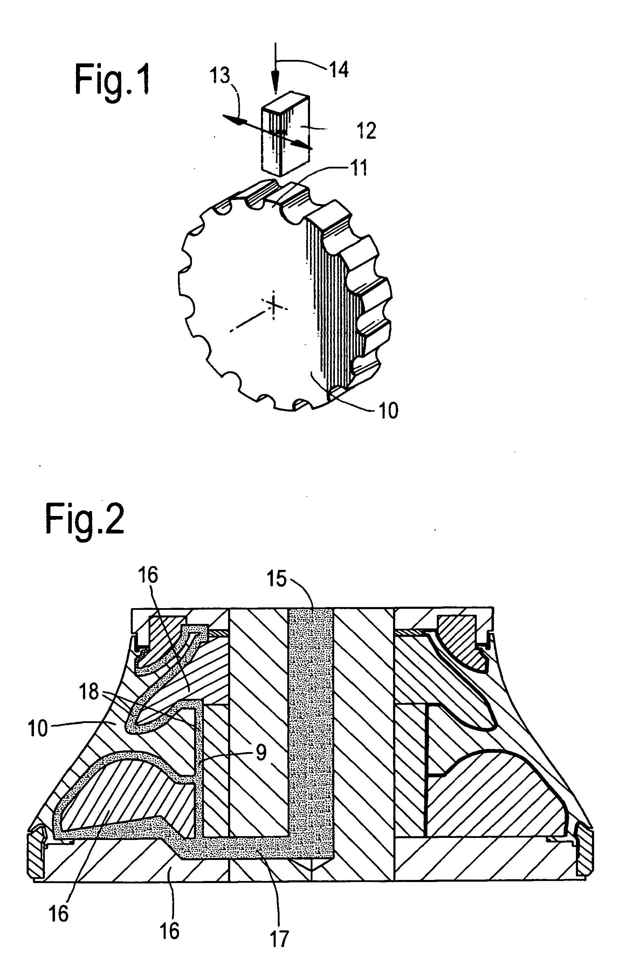

Figure 1 shows a diagrammatic view in which a second work piece in the form of a blade blank 12 is to be attached to a first work piece, which is a disc 10. The disc 10 is held stationary and is provided with a plurality of upstanding stubs 11 on its periphery. The blade blank 12 is oscillated to and fro in the direction of arrows 13 whilst being urged into contact with the stub 11 by a force 14. The forge force 14 is applied in a generally inward direction and the blade blank 12 is oscillated in a range of ±1 to ±3mm.

It will be appreciated by one skilled in the art that the range of oscillation and the forge force 14 applied will depend upon the area of the joint and the materials being welded.

The forge force 14 applied is sufficient to melt the material at the interface and weld the blade blanks 12 to the stubs 11 on the periphery of the disc 10.

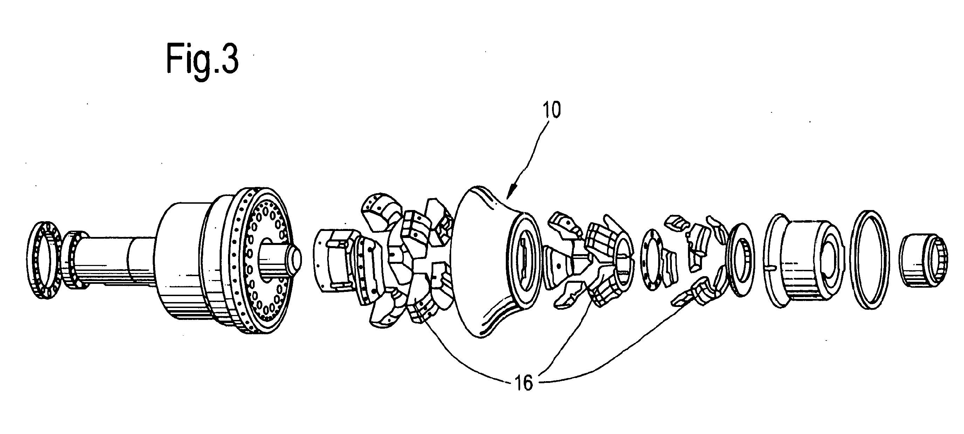

During the friction welding process the internal surface of the disc 10 is mounted on a support member 16, figure 2. The support member 16 is composed of a number of inserts which form segmented rings, figure 3. The inserts, are assembled within the disc 10 and are manufactured from tool steel so that they have a high Young's modulus to provide maximum rigidity. The inserts enable re-entrant features of the disc geometry to be accommodated.

A cavity 18 is defined between the inserts, which together form a support member 16, and an internal surface 9 of the disc 10. The cavity 18 is filled with a low melting point alloy.

In the preferred embodiment of the present invention the cavity 18 is filled with a tin-bismuth alloy. The alloy is heated to a temperature above its melting point and is then poured into the cavity 18 between the support member 16 and the disc 10. The molten alloy is introduced through a central bore 15 in the support member 16 and is then delivered through a series of channels 17 to the cavity 18. A gravity feed system is used and delivers the molten alloy into the cavity 18. By pouring the alloy in at a height, sufficient pressure is generated to provide the energy to deliver the molten alloy into the cavity 18. The initial temperature of the alloy is preferably 250° to 300°C which allows complete filling of the cavity 18 before the alloy solidifies.

Upon solidification the alloy expands to form a compressed layer of alloy in the cavity 18. This compressed layer provides adequate rigidity and provides a load path from the disc 10 to the support member 16. The compressed alloy layer has a thickness of the order of 3mm and is compliant enough that it allows for tolerances in the disc 10 whilst offering the required level of support during the subsequent welding operation. The use of a compressed alloy layer in the cavity 18 enables the welding operation to be carried out accurately with the required level of repeatability.

On completion of the welding operation the disc 10 is heated and when molten the low melting point alloy is drained out of cavity 18 to allow separation of the disc 10 from the support member 16.

Whilst the present invention has been described with reference to a low temperature alloy, such as Tin-Bismuth alloy it will be appreciated that other materials may be used.

In the preferred embodiment of the present invention a titanium disc 10 is supported by inserts made from tool steel known by the trade name of AISI™ 4340. A low melting point alloy, manufactured by the company Mining and Chemical Products Ltd, with the trade name MCP™ 137, fills the cavity 18. The Young's modulus and Poisson's ratio for these chosen materials are shown in Table 1.

**Table 1**

| Item | Material | Young's Modulus (GPa) | Poisson's Ratio |
|---|---|---|---|
| Disc | Ti 6/4 | 115 | 0.32 |
| Low Melting Point Alloy | MCP™ 137 | 40 | 0.30 |
| Inserts | AISI™ 4340 | 205 | 0.30 |

It is the volume ratio between the low melting point alloy and the segmented inserts and the thickness of the compressed layer that affect the final rigidity. To achieve the required rigidity the volume ratio of the inserts to the low melting point alloy needs to be high so that the average Young's modulus of the combined materials is as high as possible whilst the compressed layer adjacent to the work piece should be thin but uniform to provide the greatest possible support.

The combination of coefficients of thermal expansion of the work piece, support member and the low melting point alloy and their starting temperatures must be selected to allow the alloy to flow to the required areas before solidifying whilst at the same time achieving satisfactory compression. Table 2 shows the coefficient of thermal expansions for each of the preferred components in accordance with the present invention.

**Table 2**

| Item | Material | Thermal Expansion Coefficient (10-6) | Thermal Conductivity (W/mK) |
|---|---|---|---|
| Disc | Ti 6/4 | 8.6 | 6.7 |
| Lex Melting Point Alloy | MCP™ 137 | 17.0 | 18.5 |
| Inserts | AISI™ 4340 | 12.3 | 44.5 |

The low melting point alloy MCP™ 137 has a net volumetric expansion of approximately 0.5% which locks the tooling together and ensures that the inserts, which form the support member 16, are properly seated.

The material selected however should have a low solidification temperature, a low pouring viscosity, satisfactory shear and compressive strength and be compatible with the support member 16 and the work piece 10. It is also preferable to select a material with minimal expansion and contraction on solidification.

The compressed layer must be thick enough to be cast yet stiff enough to withstand the weld pressures. If the layer is too thick there will not be adequate support from the support member 16 and the layer will deform plastically thus deforming the work piece, disc 10. Yet if the layer is too thin, it will not accommodate the varying disc size and casting will be difficult due to the reduced channel volume. For the welding operation described it has been found that the optimum thickness of the compliant layer is of the order of 3mm.

For welding applications the material chosen would ideally have a solidification temperature of less than 300°C and yield strength of the order of 40MPa. However yield strength of less than 40MPa can be accepted by having a thinner compliment layer and thus transferring the welding forces through to the support member 16.

## Claims

1. A method of supporting a work piece (10) during a welding operation comprising the steps of mounting a first work piece (10) on a support member (16) **characterised in that** the first work piece (10) is mounted on the support member (16) to define a cavity (18) between an internal surface (9) of the work piece (10) and the support member (16), pouring a material into the cavity (18) between the work piece (10) and the support member (16), solidifying the material in the cavity (18), the solidifying material expanding to fill the cavity (18) and form a compressed layer which stiffens the support members (16), welding at least one second work piece (12) to an outer surface (11) of the first work piece (10), the welding loads being transmitted through the compressed layer which acts to support the internal surface (9) of the first work piece (10) during the welding process, melting the compressed layer to release the welded work pieces (10, 12) from the support member (16).

2. A method as claimed in claim 1 **characterised in that** the material poured into the cavity is a low melting point alloy.

3. A method as claimed in claim 2 **characterised in that** the low melting point alloy has a yield strength of the order of 40MPa.

4. A method as claimed in any of claims 1-3 **characterised in that** the thickness of the compressed layer is in the range of 1-10mm.

5. A method as claimed in claim 4 **characterised in that** the compressed layer has a thickness of the order of 3mm.

6. A method as claimed in any preceding claim in which the low melting point alloy has a volumetric expansion of the order of 0.5% upon solidification.

7. A method as claimed in any preceding claim **characterised in that** the support member (16) is at least partially segmented.

8. A method as claimed in any preceding claim **characterised in that** the support member (16) is made from a tool steel.

9. A method as claimed in any of claims 1-8 **characterised in that** the first work piece (10) is a disc and the second work piece (12) is a blade.

10. A method as claimed in claim 9 **characterised in that** the support member (16) is segmented to support re-entrant features on the internal surface (9) of the disc (10).

11. A method as claimed in any preceding claim **characterised in that** the welding process is a friction welding process.

## Patentansprüche

1. Verfahren zum Abstützen eines Werkstücks (10) während eines Schweißvorganges, bei dem ein erstes Werkstück (10) auf einem Stützglied (16) montiert wird, **dadurch gekennzeichnet, dass** das erste Werkstück (10) auf dem Stützglied (16) derart montiert wird, dass ein Hohlraum (18) zwischen einer inneren Oberfläche (9) des Werkstücks (10) und dem Stützglied (16) gebildet wird, dass ein Material in den Hohlraum (18) zwischen dem Werkstück (10) und dem Stützglied (16) eingegossen wird, dass das Material in dem Hohlraum (18) erstarrt, wobei das erstarrende Material expandiert und den Hohlraum (18) ausfüllt, um eine komprimierte Schicht zu erzeugen, die das Stützglied (16) versteift, dass wenigstens ein zweites Werkstück (12) auf einer äußeren Oberfläche (11) des ersten Werkstücks (10) aufgeschweißt wird, wobei die Schweißbelastung über die komprimierte Schicht übertragen wird, die eine Abstützung der inneren Oberfläche (9) des ersten Werkstücks (10) während des Schweißvorganges bewirkt, und dass die komprimierte Schicht ausgeschmolzen wird, um die verschweißten Werkstücke (10, 12) vom Stützglied (16) freizugeben.

2. Verfahren nach Anspruch 1, **dadurch gekennzeichnet, dass** das Material, das in den Hohlraum eingegossen wird, eine Legierung mit niedrigem Schmelzpunkt ist.

3. Verfahren nach Anspruch 2, **dadurch gekennzeichnet, dass** die Legierung mit niedrigem Schmelzpunkt eine Streckfestigkeit von 40 MPa hat.

4. Verfahren nach einem der Ansprüche 1 bis 3, **dadurch gekennzeichnet, dass** die Dicke der komprimierten Schicht in dem Bereich zwischen 1 und 10 mm liegt.

5. Verfahren nach Anspruch 5, **dadurch gekennzeichnet, dass** die komprimierte Schicht eine Dicke von etwa 3 mm hat.

6. Verfahren nach einem der vorhergehenden Ansprüche, bei welchem die Legierung mit niedrigem Schmelzpunkt bei der Erstarrung eine volumetrische Expansion von etwa 0,5% hat.

7. Verfahren nach einem der vorhergehenden Ansprüche, **dadurch gekennzeichnet, dass** das Stützglied (16) wenigstens teilweise segmentiert ist.

8. Verfahren nach einem der vorhergehenden Ansprüche, **dadurch gekennzeichnet, dass** das Stützglied aus einem Werkzeugstahl besteht.

9. Verfahren nach einem der Ansprüche 1 bis 8, **dadurch gekennzeichnet, dass** das erste Werkstück (10) eine Rotorscheibe und das zweite Werkstück (12) eine Laufschaufel ist.

10. Verfahren nach Anspruch 9, **dadurch gekennzeichnet, dass** das Stützglied (16) derart segmentiert ist, dass hinterschnittene Abschnitte auf der inneren Oberfläche (9) der Rotorscheibe (10) gebildet werden.

11. Verfahren nach einem der vorhergehenden Ansprüche, **dadurch gekennzeichnet, dass** der Schweißvorgang ein Reibungsschweißverfahren ist.

## Revendications

1. Procédé pour supporter une pièce à usiner (10) pendant une opération de soudage comprenant les étapes consistant à monter une première pièce à usiner (10) sur un élément de support (16), **caractérisé en ce que** la première pièce à usiner (10) est montée sur l'élément de support (16) pour définir une cavité (18) entre une surface interne (9) de la pièce à usiner (10) et l'élément de support (16), déverser un matériau dans la cavité (18) entre la pièce à usiner (10) et l'élément de support (16), solidifier le matériau dans la cavité (18), le matériau solidifié s'expansant pour remplir la cavité (18) et former une couche compressée qui renforce l'élément de support (16), souder au moins une seconde pièce à usiner (12) sur une surface externe (11) de la première pièce à usiner (10), les charges de soudage étant transmises par la couche compressée qui sert à supporter la surface interne (9) de la première pièce à usiner (10) pendant le procédé de soudage, faire fondre la couche compressée pour libérer les pièces à usiner (10, 12) soudées de l'élément de support (16).

2. Procédé selon la revendication 1, **caractérisé en ce que** le matériau déversé dans la cavité est un alliage à faible point de fusion.

3. Procédé selon la revendication 2, **caractérisé en ce que** l'alliage à faible point de fusion a une limite d'élasticité de l'ordre de 40 MPa.

4. Procédé selon l'une quelconque des revendications 1 à 3, **caractérisé en ce que** l'épaisseur de la couche compressée est de l'ordre de 1 - 10 mm.

5. Procédé selon la revendication 4, **caractérisé en ce** la couche compressée a une épaisseur de l'ordre de 3 mm.

6. Procédé selon l'une quelconque des revendications précédentes, dans lequel l'alliage à faible point de fusion a une expansion volumétrique de l'ordre de 0,5 % suite à la solidification.

7. Procédé selon l'une quelconque des revendications précédentes, **caractérisé en ce que** l'élément de support (16) est au moins partiellement segmenté.

8. Procédé selon l'une quelconque des revendications précédentes, **caractérisé en ce que** l'élément de support (16) est réalisé à partir d'un acier à outil.

9. Procédé selon l'une quelconque des revendications 1 à 8, **caractérisé en ce que** la première pièce à usiner (10) est un disque et la seconde pièce à usiner (12) est une lame.

10. Procédé selon la revendication 9, **caractérisé en ce que** l'élément de support (16) est segmenté pour supporter les caractéristiques rentrantes sur la surface interne (9) du disque (10).

11. Procédé selon l'une quelconque des revendications précédentes, **caractérisé en ce que** le procédé de soudage est un procédé de soudage par friction.
